# EUROPEAN PATENT APPLICATION

(11) **EP 1 291 199 A1**
(43) Date of publication of application: **12.03.2003**
(21) Application number: 02712412.2
(22) Date of filing: 18.02.2002
(51) Int. Cl.: B42D 15/00, B42D 15/10, G03H 1/18, G06K 19/00, G07D 7/00

(54) **CARD TRUE/FALSE DECISION APPARATUS**

(30) Priority: 27.03.2001 JP 2001089336
(71) Applicant: Kabushiki Kaisha TOPCON, Tokyo 174-0052 (JP)
(72) Inventor: HORI, Nobuo, c/o Kabushiki Kaisha TOPCON, Itabashi-ku, Tokyo 174-0052 (JP); NAGANO, Shigenori, c/o Kabushiki Kaisha TOPCON, Itabashi-ku, Tokyo 174-0052 (JP)
(74) Representative: Pfenning, Meinig & Partner
(86) International application number: JP0201346
(87) International publication number: WO02076761

(57) **Abstract**

An apparatus for discriminating authenticity of a card according to the present invention comprising measuring light projecting system 23 which projects a measuring beam of light P from a predetermined direction onto a hologram 2 formed on a predetermined position on a card 1, a light receiving element 24b which receives reflected diffraction light R1, R2 and R3 generated by the measuring beam of light P reflected on the hologram 2, an averaging means 25 which varies projecting position of the measuring beam of light P to average received light signals corresponding to distribution characteristics of light intensity on the light receiving element 24b, and a discriminating means 26 to discriminate authenticity for the card by a comparison of output from the averaging means 25 with an allowable value.

## Description

### Field of the Invention

The present invention relates to an apparatus for discriminating authenticity of a card having a hologram.

### Description of the Related Art

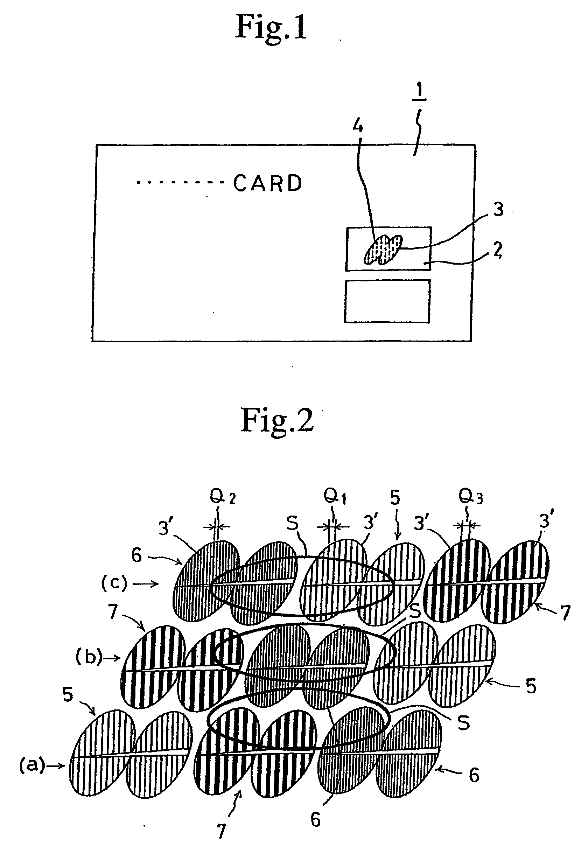

Up to now, as shown in Fig. 1, there is known a card 1 such as a credit card, for example, on which a hologram seal 2 is provided. The hologram seal 2 is formed with an image 4 composed of grid patterns 3.

In the past, authenticity of the card 1 has been discriminated by the naked eye. However, it is difficult to discriminate objectively the authenticity of the card 1 by viewing the image formed on the hologram seal 2 with the naked eye, because the image 4 may be varied in response to a direction of incident light onto the card or there may be formed scratch on the card 1.

Recently, to objectively discriminate the authenticity of card 1, there is being developed an authenticity discriminating apparatus in which the authenticity discrimination of card is performed on the basis of peak strength of light intensity distribution of the reflected diffraction light, a position of center of mass for the distribution, a width of its spread, number of peaks and so on by projecting a measuring beam onto the hologram seal and receiving a reflected diffraction light based on the measuring beam reflected on the hologram seal by a light receiving element (for example, see Japanese Patent Application No. 2000-118067).

However, in the hologram seal 2 there is one in which a grid pattern 5 having diffraction gratings 3' with a predetermined width of pitch Q1 and grid patterns 6 and 7 having diffraction gratings 3' with the same direction of arrays as the former gratings but predetermined different widths of pitches Q2 and Q3 are alternatively arranged with a constant cycle, as shown in Fig. 2. In this case, it is supposed that they are Q1 > Q3 > Q2.

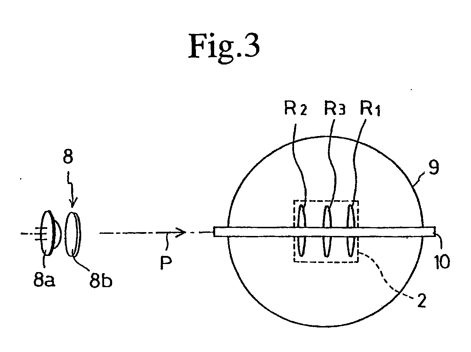

When a measuring beam P as a parallel beam is projected onto the hologram seal 2 of the kind as above described from a measuring-light projecting system 8 shown in Fig. 3, reflected diffraction lights R1, R2 and R3 are generated by the hologram seal 2 based on the measuring beam.

Here, the reflected diffraction light R1 is based on the grid pattern 5, the reflected diffraction light R2 is based on the grid pattern 6 and the reflected diffraction light R3 is based on the grid pattern 7, respectively.

The respective reflected diffraction lights R1, R2 and R3 are detected by a line sensor 10 as a light receiving element through a Fourier transformation lens 9. By obtaining presence or absence of light intensity distribution, a peak strength of the light intensity distribution and width of its spread of the respective reflected diffraction lights R1, R2 and R3 on the basis of output of the received light on the respective elements of the line sensor 10 by a calculating means (not shown in the drawings), the discrimination of authenticity of the card can be performed.

Note that reference numeral 8a in Fig. 3 denotes a semiconductor laser. Reference numeral 8b denotes a collimating lens by which a divergent beam exited from the semiconductor laser 8a is transformed into a parallel beam.

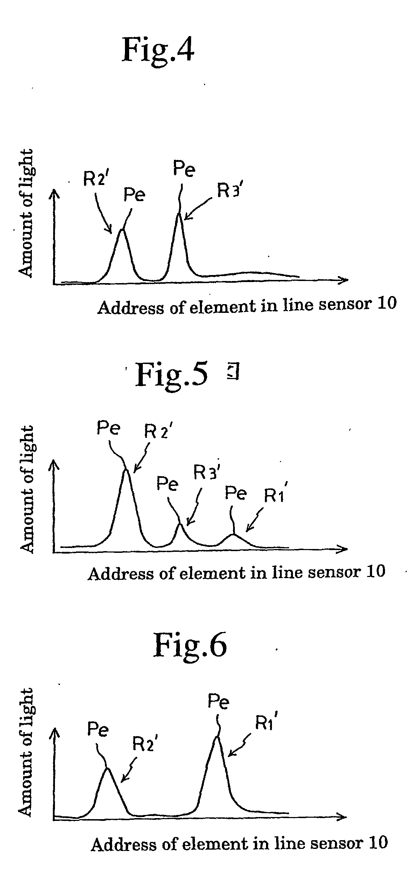

By the way, noting a spot S of the measuring beam P on the hologram seal 2 of this kind, the measuring beam P is not always projected on all of the three grid patterns 5, 6 and 7. In other words, as shown at reference symbol (a) in Fig. 2, when the measuring beam P is projected only on the both of grid patterns 6 and 7 and not on the grid pattern 5, only the light intensity distribution R2' of the reflected diffraction lights R2 corresponding to the grid pattern 6 and the light intensity distribution R3' of the reflected diffraction lights R3 corresponding to the grid pattern 7 are obtained and the light intensity distribution R1' of the reflected diffraction lights R1 corresponding to the grid pattern 5 is not obtained on the line sensor 10 as shown in Fig. 4. At the same time a peak Pe of the light intensity distribution R2' and a peak Pe of the light intensity distribution R3' are made different because of a difference between a projected area of the grid pattern 6 and a projected area of the grid pattern 7 by the measuring beam P.

On the other hand, when the projected area of the grid pattern 6 by the measuring beam P is much larger than those of the other grid patterns 5 and 7 as shown for example at reference symbol (b) in Fig. 2 even though the measuring beam P is projected on the respective grid patterns 5, 6 and 7 then the respective light intensity distributions R1', R2' and R3' of the reflected diffraction light R1, R2 and R3 which correspond respectively to the grid patterns 5, 6 and 7 on the line sensor 10 as shown in Fig. 5, height of two peaks Pe for the distribution of light intensity R1' and R3' generated by the grid patterns 5 and 7 are made extremely lowered in comparison with a height of peak Pe for the distribution of light intensity R2' based on the grid pattern 6.

For example, in other case, as shown at reference symbol (c) in Fig. 2, when the measuring beam P is projected only on the both of grid patterns 5 and 6 and not on the grid pattern 7, only the light intensity distribution R1' of the reflected diffraction lights R1 corresponding to the grid pattern 5 and the light intensity distribution R2' of the reflected diffraction lights R2 corresponding to the grid pattern 6 are obtained and the light intensity distribution R3' of the reflected diffraction lights R3 corresponding to the grid pattern 7 is not obtained on the line sensor 10 as shown in Fig. 6.

Accordingly, the authenticity of the card can not be objectively discriminated because the distribution of light intensity of the reflected diffraction light are changed by a illuminated position to the grid patterns 5, 6 and 7, even when the measuring beam P is projected onto the hologram seal 2 of this kind.

The present invention has been made in consideration of the above circumstances and it is an object of the present invention to provide an authenticity discriminating apparatus even for a card having a hologram seal in that a grid pattern with diffraction gratings of a predetermined pitch and grid patterns having diffraction gratings with the same directions of array as the former gratings but predetermined different pitches are alternatively arranged in a constant cycle.

### Disclosure of the Invention

An apparatus for discriminating authenticity of a card as recited in claim 1 is characterized by including: a measuring light projecting system which projects a measuring beam from a predetermined direction onto a hologram formed on a predetermined position on the card; a light receiving element to receive reflected diffraction light based on the measuring beam which is reflected on the hologram; an averaging means to average a received light signal which corresponds to a distribution of light intensity on the light receiving element by varying a projecting position on the hologram of the measuring beam of light; and a discriminating means to discriminate the authenticity of the card by a comparison of output of the averaging means with an allowable value.

An apparatus for discriminating authenticity of a card as recited in claim 2 is characterized in that the averaging means is composed of a totalizing means to totalize the received light signals.

An apparatus for discriminating authenticity of a card as recited in claim 3 is characterized by further including a card conveying means and characterized in that the averaging means averages the received light signals on a basis of received light signals of the light receiving element while the card is conveyed.

An apparatus for discriminating authenticity of a card as recited in claim 4 is characterized by discriminating the authenticity of a card having a hologram seal in that a grid pattern having diffraction gratings of a predetermined width of pitch and at least one grid pattern having diffraction gratings whose direction of array is identical with the former diffraction gratings but whose predetermined width of pitch is different are alternatively arranged in a predetermined cycle.

An apparatus for discriminating authenticity of a card as recited in claim 5 is characterized in that the card has a hologram seal and in that a grid pattern with diffraction gratings of a predetermined width of pitch and at least one grid pattern with diffraction gratings whose direction of array is identical with the former gratings but whose predetermined width of pitch is different are alternatively arranged in a predetermined cycle, and characterized by including: a measuring light projecting system having a semiconductor laser which generates a laser beam and a collimating lens which transforms the laser beam into parallel as a measuring beam of light and which projects the measuring beam of light onto the hologram seal; a reflected diffraction light detecting system having a line sensors which receives reflected diffraction light reflected by the hologram seal and a Fourier transforming lens which is arranged between the card and the line sensor to detect the reflected diffraction light reflected by the hologram seal; a projecting position varying means which varies a projecting position on the hologram seal of the measuring beam to obtain distribution characteristics of light intensity generated by reflected diffraction light from the respective grid patterns on the line sensor in an averaged form; a totalizing means to which received light signals from respective elements of the line sensor are input and which respectively totalizes the received light signals from the respective elements; and a discriminating means which discriminates the authenticity of the card by comparison of output from the totalizing means with an allowable value.

An apparatus for discriminating authenticity of a card as recited in claim 6 is characterized in that an arrangement of the grid patterns is formed along a direction in which the line sensor is extending in the apparatus in claim 5.

An apparatus for discriminating authenticity of a card as recited in claim 7 is characterized in that a plurality of grid patterns arranged along a direction in which the line sensor is extending are formed such that the formed positions of respective grid patterns corresponding to each other are shifted in a direction perpendicular to the direction in which the line sensor is extending and the direction in which the line sensor is extending, in the apparatus in claim 6.

An apparatus for discriminating authenticity of a card as recited in claim 8 is characterized in that the projecting position varying means is a conveying means which conveys the card along a direction perpendicular to the direction in which the line sensor is extending, in the apparatus in claim 7.

An apparatus for discriminating authenticity of a card as recited in claim 9 is characterized in that the projecting position varying means is a driving means which drives the measuring light projecting system and the reflected diffraction light detecting system along a direction perpendicular to the direction in which the line sensor is extending, in the apparatus in claim 7.

An apparatus for discriminating authenticity of a card as recited in claim 10 is characterized in that the totalizing means respectively totalizes received light output of respective light receiving elements obtained while the card is conveyed, and averages distributions characteristics of light intensity corresponding to the respective grid patterns, in the apparatus in claim 8.

### Brief Description of the Drawings

Fig. 1 is a plan view to show one example of card having a hologram seal.
Fig. 2 is an explanatory diagram to show a grid pattern which is formed on a hologram seal.
Fig. 3 is an explanatory diagram to show a reflected diffraction light which is generated by projection of a measuring beam onto the hologram seal.
Fig. 4 is an explanatory diagram to show a distribution of light intensity when a spot of measuring beam is formed on a position (a) designated in Fig. 2 in the grid pattern.
Fig. 5 is an explanatory diagram to show a distribution of light intensity when a spot of measuring beam is formed on a position (b) designated in Fig. 2 in the grid pattern.
Fig. 6 is an explanatory diagram to show a distribution of light intensity when a spot of measuring beam is formed on a position (c) designated in Fig. 2 in the grid pattern.
Fig. 7 is a perspective view to show a box of the authenticity discriminating apparatus for card in accordance with the present invention.
Fig. 8 are optical diagrams to show a measuring light projecting system and a reflected diffraction light detecting system both of which are set up in the box shown in Fig. 7, in that Fig. 8 (a) is a front view and Fig. 8 (b) is a plan view.
Fig. 9 is an explanatory diagram to show a reflected diffraction light which is generated by the measuring light projecting system shown in Fig. 8.
Fig. 10 is an explanatory diagram to show a variation of position of the spot on the hologram seal.
Fig. 11 is an explanatory diagram to show a distribution of light intensity which is changed corresponding to the variation of position of the spot on the hologram seal.
Fig. 12 is an explanatory diagram to show a distribution of averaged totalizing output.

### Best Mode for Carrying out the Invention

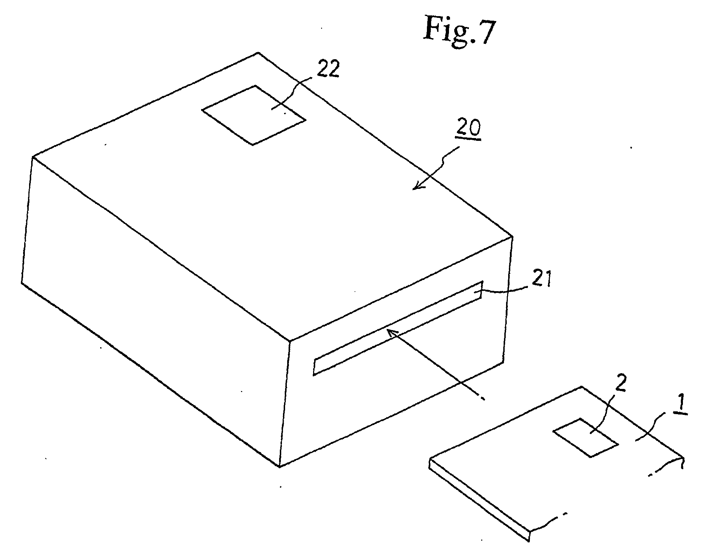

Fig. 7 is a perspective view to show one example of an apparatus for discriminating authenticity of a card in accordance with the present invention, in which reference numeral 20 designates a box in the apparatus. The box 20 is provided with a loading slot 21 for the card 1 and a display panel 22 to show an authenticity of the card 1 is provided on an upper portion of the box. It is supposed that grid patterns 5, 6, 7 are formed on the card 1 as shown in Fig. 4.

The card 1 is dragged into the box 20 by a card conveying means which is not shown in the drawings, and after the discrimination for authenticity has been completed the card 1 is automatically discharged.

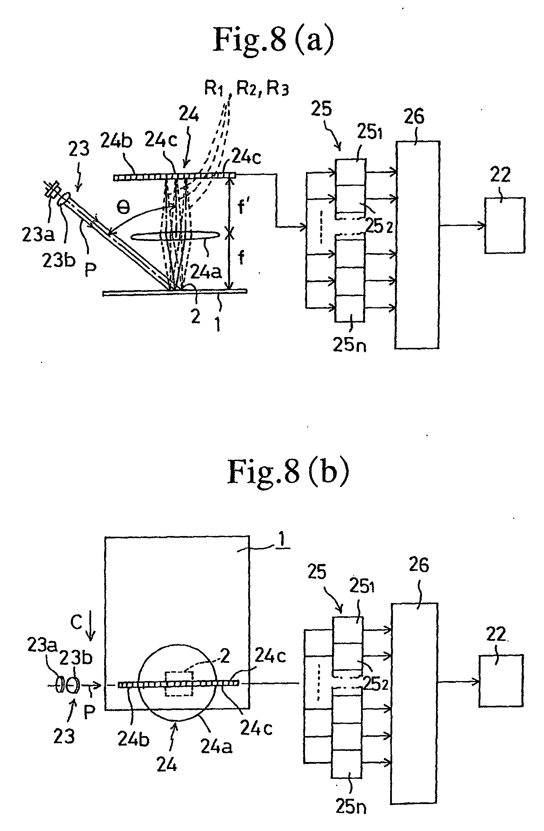

A measuring light projecting system 23 and a reflected diffraction light detecting system 24 which are shown in Fig. 8 are provided in the box 20.

The measuring light projecting system 23 is composed of a semiconductor laser 23a and a collimating lens 23b. The collimating lens 23b performs a function to transform a laser beam which is exited from the semiconductor laser 23a into a parallel light beam and to project a measuring beam P onto the card 1.

The reflected diffraction light detecting system 24 is composed of a Fourier transforming lens 24a and a line sensor 24b as a light receiving element. The card 1 is dragged into the box 20 and set at a front focusing position f of the Fourier transforming lens 24a. The line sensor 24b is set at a back focusing position f' (f = f') of the Fourier transforming lens 24a.

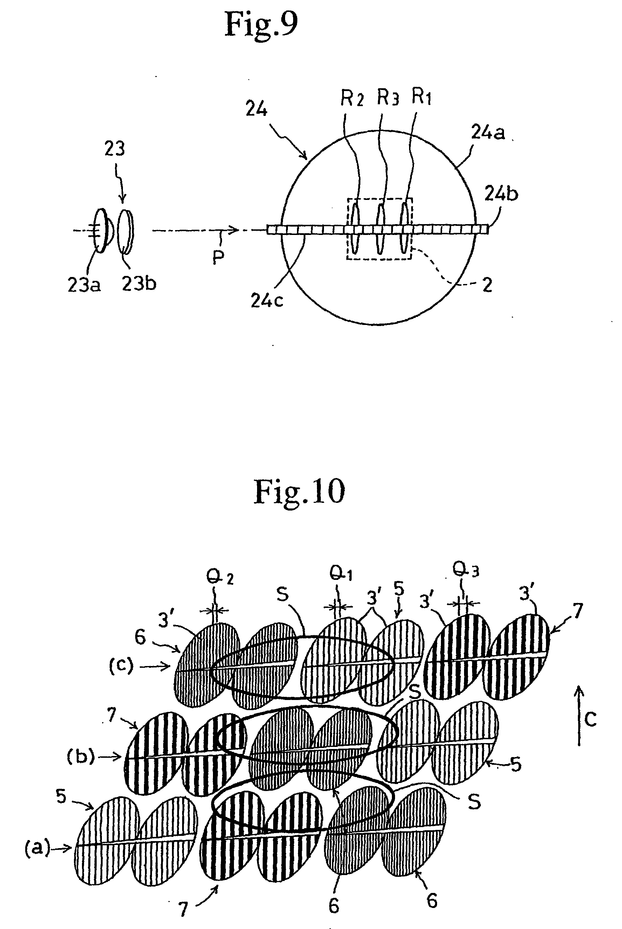

When the semiconductor laser 23a is turned on by a manipulation of a switch which is not shown in the drawings, the measuring beam P is projected from a direction in which the line sensor 24b is extending as shown in Fig. 8 (b) in a manner that an incident angle " of the measuring beam P is maintained constantly with respect to the hologram seal 2 as shown in Fig. 8 (a) to form the reflected diffraction lights R1, R2 and R3 as shown in Fig. 9 with enlargement.

The card 1 has the hologram seal 2 in which a grid pattern 5 having diffraction gratings 3 of a predetermined pitch Q1 and grid patterns 6, 7 having diffraction gratings 3' whose directions of array are identical with the diffraction gratings 3 but whose respective predetermined different pitches Q2, Q3 are different from the pitch Q1 are alternatively arranged in a constant cycle as shown in Fig. 10.

As arrangement of these grid patterns 5, 6 and 7, a plurality of patterns are formed along a direction in which the line sensor 24b is extending. As arrangement of the grid patterns 5, 6, 7, which are formed along the direction in which the line sensor 24b is extending, a plurality of patterns are formed such that the formed positions of respective grid patterns 5, 6, 7 corresponding to each other are shifted in a direction perpendicular to the direction in which the line sensor 24b is extending and at the same time in the direction in which the line sensor 24b is extending.

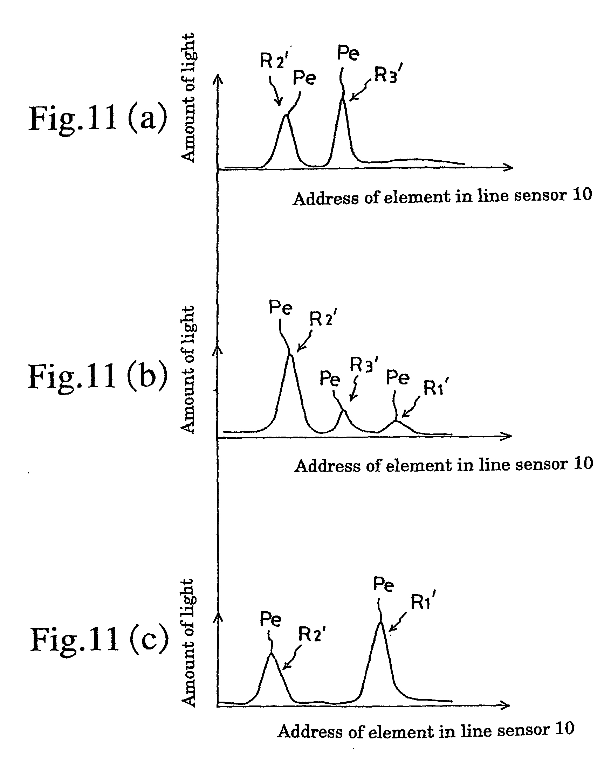

When the card 1 is conveyed by the card conveying means (not shown) to be dragged in a direction shown in an arrow C (direction that ditches of diffraction gratings 3' are extending), a position of spot S on the grid patterns 5, 6, 7 in the hologram seal 2 is relatively deflected with respect to the grid patterns 5, 6, 7 as shown by reference symbols (a), (b) and (c) in Fig. 10. Accordingly the distributions of light intensity R1', R2' and R3' of the reflected diffraction light R1, R2 and R3 are continuously varied as shown in Fig. 11 (a), (b) and (c) and in response to this variation, light receiving signals output from respective light receiving elements 24c of the line sensor 24b are continuously varied in accordance with dragging of the card 1.

In other words, the card conveying means functions as a projecting position varying means by which the projected position by the measuring beam for the hologram seal 2 is varied in order to obtain an averaged value of the respective distributions of light intensity at the line sensor 24b generated by the reflected diffraction light of grid patterns 5, 6 and 7.

Here, Fig. 11 (a) shows the distribution of light intensity when the spot S is located on a position designated by the reference symbol (a) in Fig. 10, Fig. 11 (b) shows the distribution of light intensity when the spot S is located on a position designated by the reference symbol (b) in Fig. 10 and Fig. 11 (c) shows the distribution of light intensity when the spot S is located on a position designated by the reference symbol (c) in Fig. 10.

The respective received light signals which are output from respective light receiving elements 24c (n = 1 to n) of the line sensor 24b are respectively input into respective totalizing elements 251 to 25n of a totalizing circuit 25. The respective totalizing elements 251 to 25n of totalizing circuit 25 totalize the respective received light signals from when the card 1 is inserted into the box 20 and until the card is discharged from the box 20.

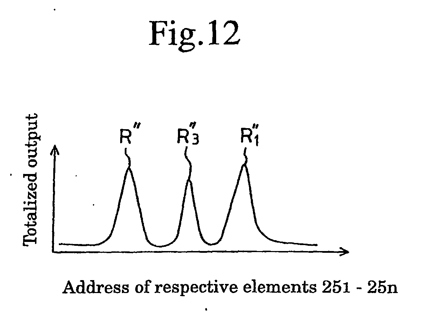

Accordingly, the received light signals generated by many numbers of grid patterns 5, 6, 7 which are formed periodically along the direction of card conveyance, are totalized with the respective totalizing elements 251 to 25n while the card 1 is conveyed. By this arrangement, totalized output R1", R2" and R3" of the distribution of light intensity R1', R2' and R3' generated by the respective grid patterns 5, 6 and 7 can be obtained as shown in Fig. 12 and thereby the respective distributions of light intensity can be averaged.

The outputs of respective totalizing elements 251 to 25n are input into a discriminating means 26 for the discriminating means 26 to perform the authenticity discriminating of the card 1 by a comparison of the output of totalizing circuit 25 with a predetermined reference value.

As the predetermined reference value, for example, presence or absence of the light intensity distribution, the peak strength of light intensity distribution and the width of its spread are used and a result of the discrimination is displayed on the display panel 22.

Note that in the embodiment described above, although the card 1 is conveyed with respect to the fixed measuring light projecting system 23 and reflected diffraction light detecting system 24 to average the received light signals while the card is conveyed, alternatively, it may be also recommendable that a moving means causing the measuring light projecting system 23 and the reflected diffraction light detecting system 24 to move integrally with respect to the fixed card 1 is used as the projecting position varying means to average the received light signals while the projecting position varying means is moved.

### Possibility of Utilization in Industry

In accordance with the present invention, there is provided an apparatus for discriminating authenticity of a card having a hologram in that a grid pattern having diffraction grating of a predetermined width of pitch and grid patterns having diffraction gratings whose directions of array are same to each other but whose respective predetermined widths of pitches are different are alternatively arranged in a predetermined cycle.

## Claims

1. An apparatus for discriminating authenticity of a card comprising:
a measuring-light projecting system which projects a measuring beam from a predetermined direction onto a hologram formed on a predetermined position on said card;
a light receiving element for receiving reflected diffraction light based on said measuring beam which is reflected on said hologram;
an averaging means to average a received light signal which corresponds to a distribution of light intensity on the light receiving element by varying a projecting position on said hologram of said measuring beam; and
a discriminating means to discriminate the authenticity of said card by a comparison of output of said averaging means with a predetermined reference value.

2. An apparatus for discriminating authenticity of a card according to claim 1, **characterized in that** said averaging means is composed of a totalizing means to totalize said received light signals.

3. An apparatus for discriminating authenticity of a card according to claim 1 or claim 2, **characterized by** further including a card conveying means and **characterized in that** said averaging means averages said received light signals on a basis of received light signals generated by said light receiving element while said card is conveyed.

4. An apparatus for discriminating authenticity of a card according to claim 1, **characterized by** discriminating the authenticity of a card having a hologram seal in that a grid pattern having diffraction gratings of a predetermined width of pitch and at least one grid pattern having diffraction gratings whose direction of array is same as said former diffraction gratings but whose predetermined width of pitch is different are alternatively arranged in a predetermined cycle.

5. An apparatus for discriminating authenticity of a card having a hologram in which a grid pattern having diffraction gratings of a predetermined width of pitch and at least one grid pattern having diffraction gratings whose direction of array is same as said former diffraction gratings but whose predetermined width of pitch is different are alternatively arranged in a predetermined cycle, **characterized by** including:
a measuring light projecting system having a semiconductor laser which generates a laser beam and a collimating lens which transforms said laser beam into parallel as a measuring beam and which projects the measuring beam onto said hologram seal;
a reflected diffraction light detecting system having a line sensors which receives reflected diffraction light reflected by said hologram seal and a Fourier transforming lens which is arranged between said card and said line sensor to detect the reflected diffraction light reflected by said hologram seal;
a projecting position varying means which varies a projecting position on said hologram seal of said measuring beam of light to obtain a set of distribution characteristics of light intensity generated by reflected diffraction light from said respective grid patterns on said line sensor in an averaged form;
a totalizing means to which received light signals from respective elements of said line sensor are input and which respectively totalizes the received light signals from the respective elements; and
a discriminating means which discriminates an authenticity of said card by comparison of output from said totalizing means with a predetermined reference value.

6. An apparatus for discriminating authenticity of a card according to claim 5, **characterized in that** an arrangement of said grid patterns is formed along a direction in which said line sensor is extending.

7. An apparatus for discriminating authenticity of a card according to claim 6, **characterized in that** a plurality of arrangements of said grid patterns formed along a direction in which said line sensor is extending are formed such that the formed positions of respective grid patterns corresponding to each other are shifted in a direction perpendicular to said direction in which said line sensor is extending and the direction in which said line sensor is extending.

8. An apparatus for discriminating authenticity of a card according to claim 7, **characterized in that** said projecting position varying means is a conveying means which conveys said card along a direction perpendicular to the direction in which said line sensor is extending.

9. An apparatus for discriminating authenticity of a card according to claim 7, **characterized in that** said projecting position varying means is a driving means which drives said measuring light projecting system and said reflected diffraction light detecting system along a direction perpendicular to the direction in which said line sensor is extending.

10. An apparatus for discriminating authenticity of a card according to claim 8, **characterized in that** said totalizing means respectively totalizes received light output of respective light receiving elements obtained while said card is conveyed, and averages distributions characteristics of light intensity corresponding to the respective grid patterns.
